Europäisches Patentamt

European Patent Office

Office européen des brevets

(11) Publication number: **0 223 560 B1**

# EUROPEAN PATENT SPECIFICATION

(45) Date of publication of patent specification: **22.07.92**

(51) Int. Cl.⁵: **A23J 3/00**, A23L 1/227, A23L 1/23, A23L 1/305, A23L 1/23

(21) Application number: **86308841.5**

(22) Date of filing: **13.11.86**

(54) **Flavour control of protein hydrolysates.**

(30) Priority: **14.11.85 GB 8528100**

(43) Date of publication of application:
**27.05.87 Bulletin 87/22**

(45) Publication of the grant of the patent:
**22.07.92 Bulletin 92/30**

(84) Designated Contracting States:
**BE CH DE FR GB IT LI NL SE**

(56) References cited:
**EP-A- 0 087 247**
**US-A- 3 843 802**

**AGRICULTURAL AND BIOLOGICAL CHEMISTRY, vol. 39, no. 2, 1975, pages 379-386; Y. MATSUMURA et al.: "Hydrolysis of proteins by successive incubation with proteinase and aminopeptidases mixture"**

**CHEMICAL ABSTRACTS, vol. 79, no. 19, 12th November 1973, page 251, no. 114211f, Columbus, Ohio, US;**

(73) Proprietor: **IMPERIAL BIOTECHNOLOGY LIMITED**
**Imperial College South Kensington Road**
**London SW7 2BT(GB)**

(72) Inventor: **Parker, David Myatt**
**10B North Road**
**Hertford Hertfordshire(GB)**
Inventor: **Pawlett, Denise**
**102 Westmoreland Avenue**
**Luton Bedfordshire(GB)**

(74) Representative: **Belcher, Simon James et al**
**Urquhart-Dykes & Lord Tower House Merrion Way**
**Leeds LS2 8PA(GB)**

# EP 0 223 560 B1

**Description**

This invention relates to a method for the flavour control of protein hydrolysates from several sources, making use of enzymes to catalyse the hydrolysis.

Hydrolysed proteins from a variety of sources find a number of uses in the food industry. For instance, they are commonly employed as a component in dehydrated soup mixes, as flavourings and in otherwise-processed foodstuffs. They also find medical uses as dietary supplements for patients suffering from a variety of diseases and metabolic disorders.

Hydrolyses have been carried out using acids or enzymes, but many of the known processes exhibit considerable defects. For instance, acid hydrolysis can lead to breakdown of amino acids produced in the hydrolysis with a consequent loss of nutritional value.

Enzymatic hydrolysis frequently leads to the production of hydrolysates having a bitter taste which militates against their use for nutritional purposes. Various attempts have been made to overcome this problem in the past, and several studies have been made in an effort to ascertain the cause of bitterness and to provide methods of avoiding, or overcoming it.

JP 75-69100 employs cyclodextrin to remove bitterness of products obtained by hydrolysing casein with pepsin. US 4130555 discloses the use of ion-exchange chromatography of acid hydrolysed gelatin or collagen.

EP-A-0014362 discloses the treatment of protein hydrolysates with a powdered ligneous absorbent, preferably a material obtained by extracting sugars from ground carob beans with hot water, and subsequent treatment with hydrochloric acid and steam distillation. Other approaches have involved the careful limitation of the degree of hydrolysis, since the bitterness appears to be a property of certain oligopeptides obtained as the hydrolysis progresses. For instance, GB-1547911 discloses a process in which soy protein is hydrolysed under controlled conditions with microbial alkaline proteinase until the degree of hydrolysis is from 8 to 15%.

Another approach has been the use of complex mixture of enzymes. For instance, GB-1338936 discloses the hydrolysis of an already partially hydrolysed protein solution with an exoenzyme preparation comprising of an aqueous homogenate of kidney tissue.

EP-A-87247 discloses a process of enzymatically hydrolysing proteinaceous material, which comprises subjecting a source of protein to hydrolysis by commercial fungal protease. The resulting hydrolysate has a low degree of bitterness so that it is organoleptically acceptable, as a result of the hydrolysis reaction taking place to such an extent that the hydrolysate contains only free amino acids and low molecular weight peptides.

Agricultural and Biological Chemistry, volume 39, pages 379-386 (1975) discloses a process which uses aminopeptidases derived from Bacillus subtilis which are found to hydrolyse proteins completely into amino acids and ammonia.

Chemical abstracts, volume 79, page 251, number 114244f (1973), which refers to JP-A-73.52967, discloses a method for debittering a milk casein feedstock, which involves a first step of hydrolysing the casein to produce a hydrolysate having a bitter flavour, and then treating the hydrolysate with an extract containing an enzyme derived from one of a list of fungi, to remove bitter flavours.

It has now been found that, by the use of certain enzymes from microbial sources, it is possible to hydrolyse protein extracts (animal, vegetable and microbial), such that the bitter materials are themselves broken down. Additionally in some instances, the further hydrolysis results in the development of improved and pleasant flavours.

According to the present invention, there is provided a method for modifying the flavour of a proteinaceous feedstock, which comprises:

(a) subjecting the feedstock to a primary enzymatic hydrolysis with a proteinase to provide a bitter primary hydrolysate, and

(b) subjecting the resulting primary hydrolysate to a secondary enzymatic hydrolysis with an extract containing a debittering aminopeptidase enzyme derivable from the bacterium Streptococcus lactis;

the overall degree of hydrolysis of the resulting secondary hydrolysate being such that bittering substances in the primary hydrolysate are converted at least to flavour neutral substances.

The enzymes which are employed may be derived for example, from streptococcus lactis (NCDO 712) in the manner described by Law and Wigmore in Journal of Dairy Research (1983), 50, 519-525.

This provides a source of peptidase enzymes (referred to later in this document simply as "aminopeptidase") which are preferably used in conjunction with proteinase. enzymes e.g. from strains of Bacillus, to produce the initial hydrolysis of the proteins. These two types of enzyme can be used sequentially or simultaneously.

2

A wide variety of proteins and protein extracts can be hydrolysed in this way to give products exhibiting no bitterness and, in some instances, exhibiting a desirable flavour. For instance, both soy protein and gluten can be further hydrolysed to remove the bitter flavour and produce a meaty flavour.

Casein suspended in water has itself an insipid flavour but develops on primary hydrolysis an intense bitterness. Secondary hydrolysis by the process of the invention provides a product having a distinct cheddar cheese flavour.

Other protein extracts which can be hydrolysed by the process of the invention are, for example, haemoglobin, yeast extract, whey protein, cereal and bean proteins, potato extract, and microbial protein e.g. Pruteen (Registered Trade Mark).

The process of the invention is conveniently carried out in aqueous conditions at temperatures from 10 and 50ºC, more preferably from 25 to 45ºC.

The pH of the reaction is conveniently from 5 to 9.5. To produce a mildly flavoured or bland product a pH of between 7 and 9 is required and more preferably from 7.5 to 8.5. For a strongly flavoured product the reaction is carried out in the pH range 5 to 6.5, and more preferably from pH 5.3 to 5.8.

It is convenient to use from 0.03 to 5.0 aminopeptidase units. When using casein, it is convenient to use 0.3 to 5.0 and more preferably 1.0 to 2.5 aminopeptidase units per gram of protein. One aminopeptidase enzyme unit is defined as that amount of enzyme which, when used to hydrolyse a 0.6 mM solution of L-leucine p-nitroanilide at pH 7 and 30°C produces product at a rate of one $\mu$mole per minute.

The use of 1.72 aminopeptidase units per gram of protein at 32°C leads to the development of a pleasant cheese flavour in a period of 2.5 to 3.5 hours, when a partially hydrolysed casein or casein containing material is used as substrate.

The products of the hydrolysis of the present invention can be adjusted therefore to produce a pleasant cheddar cheese flavour. In a particularly preferred embodiment the feedstock is casein and the aminopeptidase is derived from Streptococcus lactis. In one embodiment of the invention this flavour may be modified to produce other cheese flavours such as parmesan or other blue-cheese flavours. To this end a product of the invention is further incubated with a source of comestible fat and a lipase enzyme.

The following examples illustrate specific embodiments of the invention.

Freeze dried extracts of the disrupted cells of cultivated strains of the bacterium Streptococcus prepared in a manner as described by Law and Wigmore (see above), were used as aminopeptidase source. This preparation typically had an enzyme activity of around 13 units per gram of powder.

The degree of protein hydrolysis is defined as the number of peptide bonds cleaved, compared to the total number of bonds present in the protein. The procedure is based on the reaction of TNBS (trinitrobenzene sulphonic acid), with the free amino groups formed by the cleavage of peptide bonds. The method of Mokrasch (1967) in Analytical Biochemistry, 18, 64-71, was employed in which the absorbance of the coloured TNBS derivatives are measured at 420 mm.

The degree of hydrolysis (DH) is given by:

$$DH(\%) = \frac{At - A^O}{A\infty - A^O} \times 100$$

Where $A^O$ is the absorbance (A420) of the native protein, $A\infty$ is the absorbance of the acid hydrolysed/protein and At is the absorbance of the partially hydrolysed protein at time (t) after the addition of the enzyme.

Example 1

A 10% w/v suspension of casein was made in distilled water and adjusted to pH 7.5. Neutral proteinase enzyme was added to give a final concentration of 0.0015 Anson units/ml and the mixture was incubated for 120 minutes at 32ºC in an incubator. At the end of this period the material was tested and found to have an unpleasant, strongly bitter taste. The material was analysed for the degree of hydrolysis achieved, which was found to be approximately 7%.

The suspension was then acidified to pH 5.5. 0.172 aminopeptidase units per ml of the preparation were added and the mixture was reincubated at 32°C. The mixture may be stirred to ensure even distribution of the enzyme if desired. After 0.5 hours the intensity of bitterness began to decrease and after 3 hours it had completely disappeared, at which point the degree of hydrolysis was estimated to be 14%. The resultant hydrolysate had concomitantly developed an attractive taste, similar in flavour to cheddar cheese, and a creamy texture.

The conditions for the development of an attractive cheese flavour were determined by varying the length of hydrolysis with neutral proteinase/and or aminopeptidase. The most pleasant cheese flavours were produced after 1.5 to 3 hours incubation with neutral proteinase followed by 2.5 to 3.5 hours incubation with aminopeptidase. This corresponded to a level of hydrolysis of between 9 and 20%. With shorter incubation times some bitterness remained whereas longer incubation times lead to the production of Meaty or off-flavours.

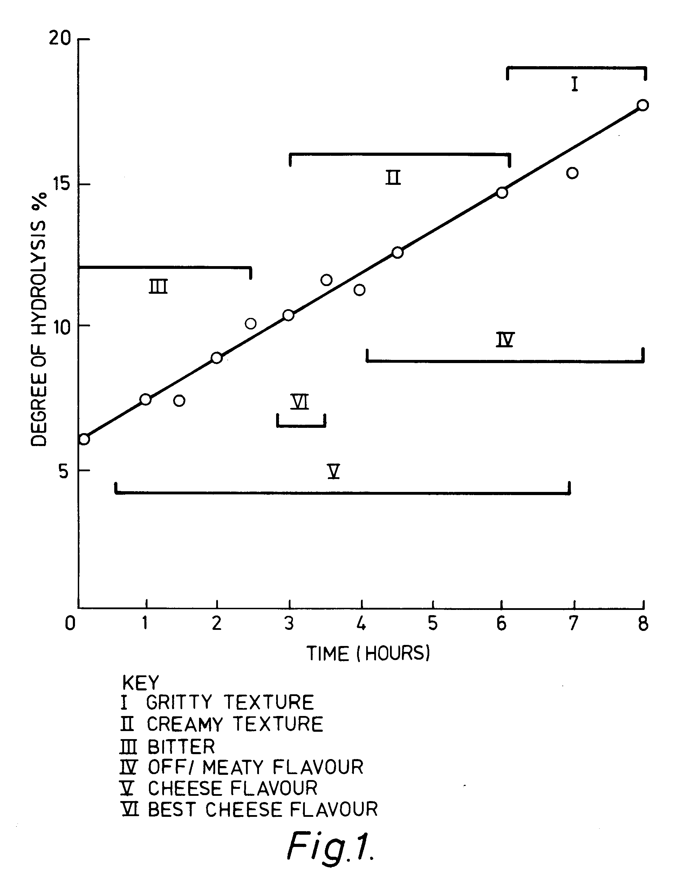

The results obtained are shown in Table 1 and illustrated graphically in Figure 1 of the accompanying drawings, in which the degree of hydrolysis is plotted against the hydrolysis time (in hours).

## TABLE 1

The effect of incubation time with neutral proteinase and aminopeptidase on the degree of hydrolysis and production of cheese flavours from casein.

| Duration of first hydrolysis by neutral proteinase (hours) | Degree of hydrolysis and flavour | | | | | |
| | Duration of second hydrolysis by aminopeptidase (hours) | | | | | |
| | O | 1 | 2 | 3 | 4 | 6 |
|---|---|---|---|---|---|---|
| 0.5 | 2.1 b | 3.7 bc | 6.6 bc | 5.8 c | 5.4 c | 7.7 C |
| 1.5 | 6.4 b | 7.4 bc | 8.0 bc | 9.3 C | 8.2 C | 13.0 Co |
| 2 | 7.8 B | 7.0 bc | 8.7 bc | 10.5 Co | 11.2 Co | 14.2 Co |
| 3 | 10.9 B | 8.8 bc | 10.9 bc | 13.7 C | 14.8 Co | 17.6 O |
| 5/6 | 11.3 B | 10.7 bc | 12.4 bc | 14.0 C | 13.3 cO | 20.2 O |

Key:

B - very bitter
b - slightly bitter
C - strong cheese flavour
c - mild cheese flavour
O - strong off-meaty flavour
o - mild off-meaty flavour

4

Example 2

The same conditions and procedure as outlined in Example 1 were used, except that the second stage of hydrolysis using aminopeptidase was carried out at pH 7.0. The bitterness which had developed after hydrolysis with the proteinase was again dispelled by the action of the aminopeptidase. Subsequent to debittering the protein was bland, and after further hydrolysis a meaty flavour developed.

The optimum conditions for the development of a bland non-bitter product and for the development of an attractive meaty flavour were determined by varying the length of hydrolysis with the neutral proteinase and/or the aminopeptidase.

An acceptable non-bitter product, with a bland taste was produced after 1.5 to 4.5 hours incubation with neutral proteinase followed by 1 to 2 hours incubation with aminopeptidase. This corresponded to a level of hydrolysis of between 9 and 14%. Longer incubation times led to the production of a meaty flavour. The most pleasant meaty flavours were produced after 1.5 to 4.5 hours incubation with the neutral proteinase followed by 3 to 6 hours incubation with aminopeptidase. This corresponds to a level of hydrolysis of between 13 and 20%. The results obtained are shown in Table 2.

TABLE 2

The effect of incubation time with neutral proteinase and aminopeptidase on the degree of hydrolysis and production of meat flavours from casein.

| Duration of first hydrolysis by neutral proteinase (hours) | Degree of hydrolysis and flavour | | | | | | |
|---|---|---|---|---|---|---|---|
| | Duration of second hydrolysis by aminopeptidase (hours) | | | | | | |
| | 0 | 1 | 2 | 3 | 4 | 5 | 6 |
| 1.5 | 6.7 b | 7.8 b | 9.0 bl | 9.8 bl/m | 11.2 m | 12.4 m | 13.9 m |
| 2.5 | 9.2 B | 9.8 b | 10.7 bl | 11.1 bl/m | 12.8 m | 13.7 M | 14.9 M |
| 3.5 | 9.9 B | 10.4 bl | 11.7 bl/m | 14.3 m | 15.0 M | 16.1 M | 16.7 M |
| 4.5 | 10.2 B | 11.2 bl | 12.6 bl/m | 13.7 m | 15.3 M | 16.9 M | 17.6 M |
| 6 | 11.1 B | 12.4 bl | 13.6 bl/m | 14.5 m | 16.4 M | 17.8 M | 18.9 M |

Key:

B  - bitter
b  - slightly bitter
bl - bland
s  - bland/slightly meaty
m  - meaty
M  - very meaty

Example 3

The same conditions and procedures as described in Example 1 were used but in this case, milk, skimmed milk, and milk powder were substituted for casein. The initial hydrolysate produced by the action of the proteinase was slightly bitter. This bitterness was removed by the action of the peptidase, and a mild cheese flavour developed.

Example 4

Production of cheese flavours by simultaneous hydrolysis of casein with neutral proteinase and aminopeptidase.

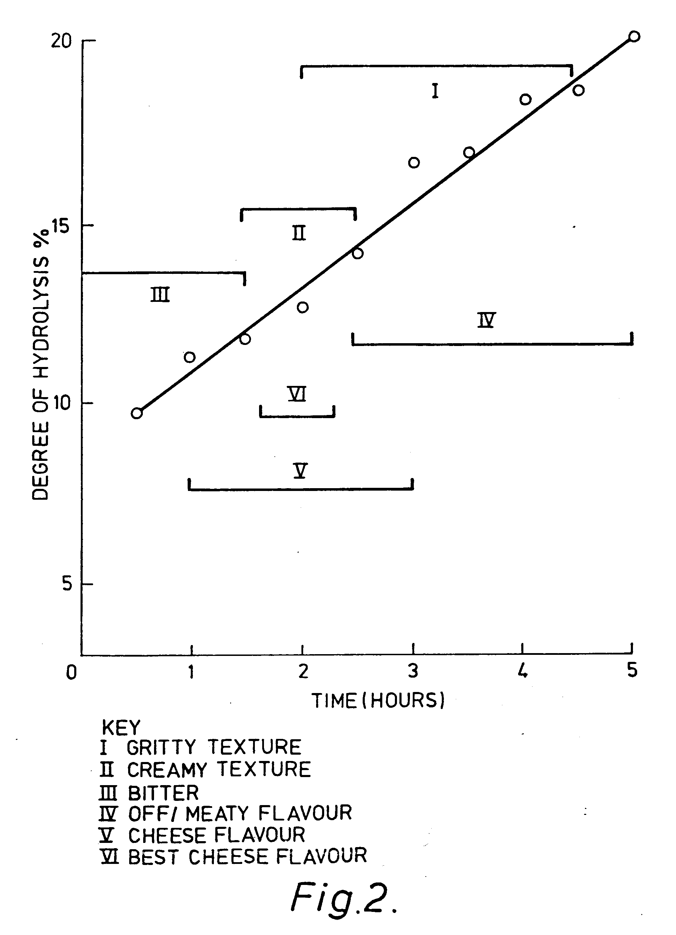

A 10% (w/v) suspension of casein in distilled water was made and adjusted to pH 5.5. Neutral proteinase and aminopeptidase were added to give final concentrations of 0.0015 Anson units/ml and 0.172 aminopeptidase units/ml respectively. The mixture was incubated at 32°C. Samples were removed periodically and analysed for cheese flavour and degree of hydrolysis. After 1.5 hours the material had a pleasant cheese flavour and a creamy texture. At this point the degree of hydrolysis was approximately 12%. The results obtained from this experiment are illustrated in Figure 2 of the accompanying drawings.

Example 5

The same procedures as outlined in Example 1 were used, but the neutral proteinase used in the first stage of the hydrolysis was substituted with a variety of other neutral, serine, thiol and acid proteinases. The initial hydrolysis was allowed to proceed for 2 hours after which all the proteinases had produced bitterness. The casein hydrolysates were then treated with aminopeptidase according to the standard conditions outlined in Example 1. Hydrolysates prepared using all the different endoproteinases could be converted into cheese flavour using the aminopeptidase, but the intensity of the cheese flavour produced varied.

Example 6

The cheese flavour produced from casein as in Example 1 is a thick suspension, containing a high proportion of insolubles. A highly water soluble, concentrated cheese flavour may also be produced.

Cheese flavour is prepared as in Example 1. The resulting suspension is then boiled for 3 to 8 minutes and separated by sedimentation or appropriate physical means. The supernatant is a clear yellow liquid with a strong cheddar cheese flavour and smell. The remaining sediment is a pale cream insoluble material with a bland flavour.

Example 7

Cheese flavour is produced from casein as in Example 1. The cheddar cheese flavour may then be further processed to produce other flavours such as parmesan or blue cheese flavours.

A source of fat (conveniently single cream) is added to a 20% (w/v) suspension of cheese flavour at a level of 20 to 35% of the final volume. The mixture is then treated with a lipase enzyme, conveniently obtained from either Candida cylindracea or porcine pancreas. Lipase is added to give a final concentration of 0.5 units/ml (one unit will hydrolyse one micro-equivalent of fatty acid from olive oil in 30 minutes at pH 7.7 at 37°C), and the solution incubated at 32°C for 2 to 3 hours.

Alternatively the fat may be treated with the lipase enzyme before adding to a suspension of cheese flavour. The cheese flavour may then be blended with the lipase treated fat to give the required flavour.

Example 8

The same conditions and procedure as outlined in Example 1 were used, except that soy protein isolate was used in place of casein and the second stage of hydrolysis using aminopeptidase was carried out at pH 7.0. Bitterness developed after hydrolysis with the proteinase, and was again dispelled by the action of the aminopeptidase. Subsequent to debittering a meaty flavour developed. The final product had a strong meaty flavour, reminiscent of smoked ham.

The optimum conditions for the development of a bland non-bitter product and for the development of an attractive meaty flavour were determined by varying the length of hydrolysis with the neutral proteinase and/or the aminopeptidase.

An acceptable non-bitter product, with a very mild meaty flavour was produced after 1.5 to 2.5 hours incubation with neutral proteinase followed by 1.5 hours incubation with aminopeptidase. This corresponded to a level of hydrolysis of between 13 and 17%. Longer incubation times led to the production of a strong meaty flavour. The most pleasant meaty flavours were produced after 1.5 to 4 hours incubation with the neutral proteinase followed by 2.5 to 8 hours incubation with aminopeptidase. This corresponds to a level of hydrolysis of between 15 and 23%. The results obtained are shown in Table 3.

When the hydrolysis using aminopeptidase was carried out at pH 5.5 the bitterness was again dispelled but over a longer time period (3-3.5 hours). Similar meaty flavours developed after approximately 5 hours.

TABLE 3

The effect of incubation time with neutral proteinase and aminopeptidase on the degree of hydrolysis and production of meat flavours from soy protein isolate.

| Duration of first hydrolysis by neutral proteinase (hours) | Degree of hydrolysis and flavour Duration of second hydrolysis by aminopeptidase (hours) | | | | |
|---|---|---|---|---|---|
| | O | 1.5 | 2.5 | 3.5 | 8 |
| 1.5 | 3.9 b | 13.2 bs | 13.7 s | 14.1 m | 16.8 M |
| 2.5 | 6.7 B | 16.8 bs | 17.1 s | 17.2 M | 18.8 M |
| 4 | 8.6 B | 18.4 b | 19.4 m | 19.8 M | 20.9 M |
| 6 | 10.6 B | 20.3 b | 21.3 m | 21.8 m | 22.9 M |
| 10 | - | - | - | 23.0 m | 25.7 m |

Key:

B - bitter
b - slightly bitter
s - bland/slightly meaty
m - meaty
M - very meaty

Example 9

The same conditions and procedure as outlined in Example 8 were used, but the dose of aminopeptidase was reduced.

A 10% suspension of soy protein isolate was treated with neutral proteinase for 2 hours, after which a bitter flavour had developed. The soy hydrolysate was then treated with aminopeptidase at pH 7.0 at 32°C using 2% to 50% of the dose used in Example 8 (0.034 to 0.86 aminopeptidase units/gram protein). At all doses the bitterness was eventually dispelled and meaty flavours developed. At the lowest dose (0.034 aminopeptidase units/gram protein) a level of hydrolysis (17.3%) which corresponded to a non-bitter, meaty flavoured product was achieved after a 12 hour incubation. The results obtained are shown in Table 4.

TABLE 4

| The effect of the dose of aminopeptidase and incubation time on the degree of hydrolysis of soy protein isolate | | | | | | |
|---|---|---|---|---|---|---|
| Aminopeptidase units/ gram protein | % of full dose | Duration of aminopeptidase hydrolysis (hours) | | | | |
| | | 2 | 5 | 8 | 12 | 30 |
| 1.72 | 100 | 18.8 | 24.5 | 33.6 | 34.6 | 52.7 |
| 0.86 | 50 | 15.9 | 23.7 | 28.6 | 32.0 | 37.3 |
| 0.43 | 25 | 16.7 | 18.7 | 28.0 | 29.6 | 35.2 |
| 0.17 | 10 | 13.5 | 17.8 | 23.2 | 26.4 | 33.3 |
| 0.086 | 5 | 12.6 | 14.5 | 19.9 | 28.8 | - |
| 0.034 | 2 | 11.9 | 12.2 | 17.3 | 24.8 | - |

Example 10

The same conditions and procedure as outlined in Example 1 were used, except that whey protein was used in place of casein and the second stage of hydrolysis using aminopeptidase was carried out at pH 7.0. Bitterness developed after hydrolysis with the proteinase, and was again dispelled by the action of the aminopeptidase. Subsequent to debittering a mild mushroom flavour developed.

The optimum conditions for the development of a bland non-bitter product and for the development of an attractive mushroom flavour were determined by varying the length of hydrolysis with the neutral proteinase and/or the aminopeptidase.

An acceptable non-bitter product, with a bland slightly milky flavour was obtained after 1.5 to 3.5 hours incubation with neutral proteinase followed by 1.5 to 2.5 hours incubation with aminopeptidase. This corresponded to a level of hydrolysis of between 8 and 10%. Longer incubation times led to the production of a mild mushroom flavour. The most pleasant mushroom flavours were produced after 1.5 to 5 hours incubation with the neutral proteinase followed by 2.5 to 8 hours incubation with aminopeptidase. This corresponds to a level of hydrolysis of between 9 and 20%. The results obtained are shown in Table 5.

9

TABLE 5

The effect of incubation time with neutral proteinase and aminopeptidase (at pH 7.0) on the degree of hydrolysis and production of either a bland or mushroom flavoured product from whey protein.

| Duration of first hydrolysis by neutral proteinase (hours) | Degree of hydrolysis and flavour | | | | |
|---|---|---|---|---|---|
| | Duration of second hydrolysis by aminopeptidase (hours) | | | | |
| | 0 | 1.5 | 2.5 | 3.5 | 8 |
| 1.5 | 4.5 b | 7.3 b/bl | 8.3 bl | 10.9 Mu | 10.8 Mu |
| 2.5 | 5.8 B | 9.1 b/bl | 9.2 bl | 11.5 Mu | 12.2 Mu |
| 3.5 | 6.2 B | 9.4 b/bl | 10.3 bl | 11.6 Mu | 12.9 Mu |
| 5 | 8.6 B | 11.7 b/bl | 11.4 bl | 13.6 Mu | 14.6 Mu |
| 8 | - | - | - | 15.9 Mu | 19.0 Mu |

Key:

B  - Bitter
b  - slightly bitter
bl - bland
Mu - mushroom flavour

Example 11

The same conditions and procedure as outlined in Example 10 were used, except that the second stage of hydrolysis using aminopeptidase was carried out at pH 5.5. Bitterness was again dispelled by the action of the aminopeptidase but over a longer period of time than at pH 7.0. Even longer incubation periods led to the development of a very mild cheese flavour.

The optimum conditions for the development of a bland non-bitter product and for the development of a mild cheese flavour were determined by varying the length of hydrolysis with the neutral proteinase and/or the aminopeptidase.

An accceptable non-bitter product, with a bland slightly milky flavour was obtained after 2 to 4.5 hours incubation with neutral proteinase followed by 2.5 hours incubation with aminopeptidase. This corresponded to a level of hydrolysis of between 8 and 10%. Incubation times of 2.5 to 4 hours with aminopeptidase led to the production of a mild cheese flavour. This corresponds to a level of hydrolysis of between 9 and 12%. Incubation times of over 6 hours with aminopeptidase gave a more meaty flavour. The results obtained are shown in Table 6.

## TABLE 6

The effect of incubation time with neutral proteinase and aminopeptidase (at pH 5.5) on the degree of hydrolysis and production of either a bland or mildly flavoured product from whey protein

| Duration of first hydrolysis by neutral proteinase (hours) | Degree of hydrolysis and flavour | | | | | |
|---|---|---|---|---|---|---|
| | Duration of second hydrolysis by aminopeptidase (hours) | | | | | |
| | O | 1.5 | 2.5 | 4 | 6 | 8 |
| 2 | 4.5 B | 6.9 b/bl | 8.6 b/bl | 9.3 c | 11.4 c | - |
| 3.5 | 5.9 B | 7.8 b/bl | 9.6 b/bl | 10.6 bc | 11.6 c/m | 12.1 m |
| 4.5 | 6.2 B | 8.2 b/bl | 10.4 b/bl | 10.7 bc | 11.7 c/m | - |

### Key:

B  - bitter
b  - slightly bitter
bl - bland
c  - mild cheese flavour
m  - mild meat flavour

Example 12

The same conditions and procedure as outlined in Example 10 were used, but the dose of aminopeptidase was reduced.

A 10% suspension of whey protein was treated with neutral proteinase for 2 hours, after which a bitter flavour had developed. The whey hydrolysate was then treated with aminopeptidase at pH 7.0 and 32ºC using 2% to 50% of the dose used in Example 10 (0.034 to 0.86 aminopeptidase units/gram protein). At a dose of 0.086 aminopeptidase units/gram protein (20% of the full dose), a level of hydrolysis (12.3%) which corresponds to a non-bitter, bland product was achieved after an 8 hour incubation. A level of hydrolysis corresponding to a mushroom flavour (18.4%) was achieved after 30 hours incubation with the aminopeptidase. At the lowest dose of aminopeptidase tested (0.034 units/gram protein), a non-bitter product was achieved after a 30 hour incubation (DH 12.6%). The results obtained are shown in Table 7.

TABLE 7

| The effect of the dose of aminopeptidase and incubation time on the degree of hydrolysis of whey protein | | | | | | |
|---|---|---|---|---|---|---|
| Aminopeptidase units/ gram protein | % of full dose | Duration of aminopeptidase hydrolysis (hours) | | | | |
| | | 2 | 5 | 8 | 12 | 30 |
| 1.72 | 100 | 21.5 | 23.9 | 25.2 | 26.8 | 33.4 |
| 0.86 | 50 | 19.2 | 20.3 | 23.0 | 24.8 | 32.7 |
| 0.43 | 25 | 16.0 | 17.7 | 19.3 | 20.5 | 25.5 |
| 0.17 | 10 | 10.7 | 13.7 | 14.3 | 16.8 | 19.1 |
| 0.086 | 5 | 10.5 | 11.2 | 12.3 | 14.3 | 18.4 |
| 0.034 | 2 | 8.4 | 8.8 | 9.1 | 11.0 | 12.6 |

Example 13

A process for the enzymatic hydrolysis of whey protein resulting in a soluble peptides having a size distribution of 2 to 15 amino acid residues with a high nutritional value and an acceptable flavour.

The same conditions as outlined in Example 10 were used. The initial hydrolysis by neutral protease was terminated after 2 hours by heating. Aminopeptidase was added (1.72 aminopeptidase units/gram protein) and the hydrolysis allowed to continue for a further 3 hours. Alternatively a lower dose of aminopeptidase may be used (0.086 aminopeptidase units/gram protein) and the incubation continued for 12 hours. In each case the final level of hydrolysis was approximately 14%.

The whey protein hydrolysate was then heated to 65ºC for 5 minutes and centrifuged to remove the insoluble material.

The peptide size distribution of the soluble fraction was determined by fast atom bombardment mass spectrometry. This technique showed the presence of peptides in the size range 350 to 1100 Daltons. Polyacrylamide gel electrophoresis (containing sodium dodecyl sulphate) showed the absence of appreciable protein or larger peptides.

Example 14

The same conditions and procedure as outlined in Example 1 were used, except that wheat gluten was used in place of casein. For the initial stage of hydrolysis a higher proteinase level was used, of 0.015 Anson units/ml. The second stage of hydrolysis using aminopeptidase was carried out at pH 7.0. Bitterness developed after hydrolysis with the proteinase, and was again dispelled by the action of the aminopeptidase. Subsequent to debittering a meaty flavour developed. The final product had a beef like flavour.

The optimum conditions for the development of an attractive beef like flavour were determined by varying the length of hydrolysis with the neutral proteinase and/or the aminopeptidase.

An acceptable non-bitter product, with a mild meaty flavour was produced after 0.5 to 1.0 hours incubation with neutral proteinase followed by a 1 to 5 hour incubation with aminopeptidase. This corresponded to a level of hydrolysis of between 20 and 26%. Longer incubation times led to the production of a strong meaty, beef like flavour. The most pleasant meaty flavours were produced after 2 to 3 hours incubation with the neutral proteinase followed by 3 to 5 hours incubation with aminopeptidase. This corresponds to a level of hydrolysis of approximately 28%. The results obtained are shown in Table 8.

## TABLE 8

The effect of incubation time with neutral proteinase and aminopeptidase on the degree of hydrolysis and production of meat flavours from wheat gluten

| Duration of first hydrolysis by neutral proteinase (hours) | Degree of hydrolysis and flavour | | | | |
|---|---|---|---|---|---|
| | Duration of second hydrolysis by aminopeptidase (hours) | | | | |
| | O | 1 | 2 | 3 | 5 |
| 0.5 | 14.3 b | 20.5 m | 22.0 m | 24.1 m | 26.3 m |
| 1 | 16.6 B | 21.8 m | 23.9 m | 25.7 m | 26.8 M |
| 2 | 20.3 B | 22.7 bm | 24.0 m | 27.2 M | 27.8 M |
| 3 | 21.6 B | 24.0 bm | 24.9 bm | 27.6 bm | 29.1 M |
| 4 | 22.9 B | 26.3 bm | 26.5 bm | 28.4 bm | 29.4 bm |

Key:

B - bitter
b - slightly bitter
s - bland/slightly meaty
m - meaty
M - very meaty

Examples 15, 16, 17, 18 and 19

The same conditions and procedures were used as described above, but the following protein containing materials were used in place of the defined proteins above; maize zein; pruteen (RTM); blood (haemoglobin); instant potato mix; yeast extract, (these latter two products were consumer food products and the haemoglobin was the substrate used to assay the neutral proteinase enzyme). Protein hydrolysates had a reduced intensity of bitterness when compared to the other examples, but this too completely disappeared when hydrolysis was continued using the aminopeptidase enzyme preparation. The final tastes of the hydrolysates were similar to those of the unhydrolysed starting materials, but more pronounced.

EP 0 223 560 B1

## Claims

1.  A method for modifying the flavour of a proteinaceous feedstock, which comprises:
    (a) subjecting the feedstock to a primary enzymatic hydrolysis with a proteinase to provide a bitter primary hydrolysate, and
    (b) subjecting the resulting primary hydrolysate to a secondary enzymatic hydrolysis with an extract containing a debittering aminopeptidase enzyme derivable from the bacterium Streptococcus lactis; the overall degree of hydrolysis of the resulting secondary hydrolysate being such that bittering substances in the primary hydrolysate are converted at least to flavour-neutral substances.

2.  A method as claimed in claim 1, in which the first and second hydrolyses are conducted simultaneously.

3.  A method as claimed in claim 1, in which the primary and secondary hydrolyses are conducted sequentially.

4.  A method as claimed in any one of claims 1 to 3, in which the proteinase is an endo-proteinase.

5.  A method as claimed in any one of claims 1 to 4, in which the aminopeptidase is derived from the bacterium Streptococcus lactis itself.

6.  A method as claimed in any one of claims 1 to 5, in which the primary and secondary hydrolyses are conducted in aqueous solution at a temperature between 10 and 50°C.

7.  A method as claimed in any one of claims 1 to 6, in which the primary and secondary hydrolyses are conducted in aqueous solution at a pH between 5 and 9.5.

8.  A method as claimed in any one of claims 1 to 7, in which the quantity of feedstock used in the secondary hydrolysis step is from 0.03 to 5.0, preferably from 0.3 to 5.0, more preferably from 1.0 to 2.5, aminopeptidase units per gram.

9.  A method as claimed in claim 8, in which the proteinaceous feedstock is casein, and in which the quantity of feedstock used in the secondary hydrolysis step is from 0.3 to 5.0, preferably from 1.0 to 2.5, aminopeptidase units per gram.

10. A method as claimed in any one of claims 1 to 9, which includes the further step of incubating the product of the secondary hydrolysis step with a lipase and a source of a comestible fat.

11. A method as claimed in any one of claims 1 to 10, in which the proteinaceous feedstock is selected from soya and other bean proteins, gluten, whey protein, casein, haemoglobin, yeast extract, cereal proteins, milk, milk powder, skimmed milk, potato extracts and microbial derived proteins.

## Revendications

1.  Procédé pour modifier la flaveur d'une charge protéinique d'alimentation à traiter, qui comprend :
    (a) la soumission de la charge à traiter à une hydrolyse enzymatique primaire à l'aide d'une protéinase, pour obtenir un hydrolysat primaire amer, et
    (b) la soumission de l'hydrolysat primaire résultant à une hydrolyse enzymatique secondaire avec un extrait contenant une enzyme de type amino-peptidase à rôle d'élimination du goût amer, enzyme pouvant provenir de la bactérie Streptococcus lactis.
    le degré global d'hydrolyse de l'hydrolysat secondaire résultant étant tel que les substances donnant un goût amer, présentes dans l'hydrolysat primaire, sont converties au moins en des substances à flaveur neutre.

2.  Procédé tel que revendiqué à la revendication 1, dans lequel on conduit simultanément les première et seconde hydrolyses.

3.  Procédé tel que revendiqué à la revendication 1, dans lequel on conduit successivement les hydrolyses

14

primaire et secondaire.

4. Procédé tel que revendiqué dans l'une quelconque des revendications 1 à 3, dans lequel la protéinase est une endo-protéinase .

5. Procédé tel que revendiqué dans l'une quelconque des revendications 1 à 4, dans lequel l'aminopeptidase provient de la bactérie Streptococcus lactis elle-même .

6. Procédé tel que revendique dans l'une quelconque des revendications 1 à 5, dans lequel on conduit les hydrolyses primaire et secondaire, en solution aqueuse à une température comprise entre 10 et 50°C .

7. Procédé tel que revendiqué dans l'une quelconque des revendications 1 à 6, dans lequel on conduit les hydrolyses primaire et secondaire, en solution aqueuse à un pH compris entre 5 et 9,5.

8. Procédé tel revendiqué dans l'une quelconque des revendications 1 à 7, dans lequel la quantité de la charge à traiter utilisée dans l'étape d'hydrolyse secondaire, est de 0,03 à 5,0, de préférence de 0,3 à 5,0 , mieux de 1,0 à 2,5 ,unités d'amino-peptidase par gramme.

9. Procédé tel que revendiqué à la revendication 8, dans lequel la charge protéinique à traiter est de la caséine, et dans lequel la quantité de charge à traiter utilisée dans l'étape d'hydrolyse secondaire est de 0,3 à 5,0 , de préférence 1,0 à 2,5, unités d'amino-peptidase par gramme.

10. Procédé tel que revendiqué à l'une quelconque des revendications 1 à 9, qui comprend l'étape supplémentaire consistant à faire incuber le produit de l'étape d'hydrolyse secondaire avec une lipase et avec une source d'une matière grasse comestible.

11. Procédé tel que revendiqué dans l'une quelconque des revendications 1 à 10, dans lequel la charge protéinique d'alimentation est choisie parmi des protéines de soja et d'autres haricots, du gluten, de la protéine de petit-lait, de la caséine, de l'hémoglobine, de l'extrait de levure, des protéines de céréales, du lait, de la poudre de lait, du lait écrémé, des extraits de pomme de terre et des protéines d'origine microbienne .

**Patentansprüche**

1. Verfahren zur Aromamodifizierung eines proteinartigen Einsatzmaterials, bei dem
   (a) das Ausgangsmaterial einer primären enzymatischen Hydrolyse mit einer Proteinase unterzogen wird, um ein bitteres Primärhydrolysat bereitzustellen und
   (b) das entstandene Primärhydrolysat einer sekundären enzymatischen Hydrolyse mit einem Extrakt, welches ein vom Bakterium Streptococcus lactis ableitbares entbitterndes Aminopeptidaseenzym enthält, unterzogen wird,
   wobei der Gesamthydrolysegrad des entstandenen Sekundärhydrolysats derart ist, daß Bitterstoffe im Primärhydrolysat zumindest in geschmacksneutrale Stoffe umgewandelt werden.

2. Verfahren nach Anspruch 1, bei dem die erste und zweite Hydrolyse gleichzeitig durchgeführt werden.

3. Verfahren nach Anspruch 1, bei dem die erste und zweite Hydrolyse nacheinander durchgeführt werden.

4. Verfahren nach einem der Ansprüche 1 bis 3, bei dem die Proteinase eine Endoproteinase ist.

5. Verfahren nach einem der Ansprüche 1 bis 4, bei dem die Aminopeptidase vom Bakterium Streptococcus lactis abstammt.

6. Verfahren nach einem der Ansprüche 1 bis 5, bei dem die Primär- und Sekundärhydrolyse in wäßriger Lösung bei einer Temperatur zwischen 10 und 50°C durchgeführt werden.

7. Verfahren nach einem der Ansprüche 1 bis 6, bei dem die Primär- und Sekundärhydrolyse in wäßriger Lösung bei einem pH-Wert zwischen 5 und 9,5 durchgeführt werden.

8. Verfahren nach einem der Ansprüche 1 bis 7, bei dem die Menge des beim zweiten Hydrolyseschritt eingesetzten Ausgangsmaterials 0,03 bis 5,0, vorzugsweise 0,3 bis 5,0 und besonders bevorzugt 1,0 bis 2,5 Aminopeptidaseeinheiten pro Gramm beträgt.

9. Verfahren nach Anspruch 8, bei dem der proteinhaltige Einsatzstoff Casein ist und die im zweiten Hydrolyseschritt eingesetzte Einsatzmenge 0,3 bis 5,0, vorzugsweise 1,0 bis 2,5 Aminopeptidaseeinheiten pro Gramm beträgt.

10. Verfahren nach einem der Ansprüche 1 bis 9, bei dem das Produkt der Sekundärhydrolyse ferner mit einer Lipase und einem eßbaren Fett inkubiert wird.

11. Verfahren nach einem der Ansprüche 1 bis 10, bei dem das proteinartige Einsatzmaterial ausgewählt ist aus Soja- und anderen Bohnenproteinen, Gluten, Molkeneiweiß, Casein, Hämoglobin, Hefeextrakt, Getreideproteinen, Milch, Milchpulver, Magermilch, Kartoffelextrakten und von Mikroben stammenden Proteinen.

KEY
I   GRITTY TEXTURE
II  CREAMY TEXTURE
III BITTER
IV  OFF/ MEATY FLAVOUR
V   CHEESE FLAVOUR
VI  BEST CHEESE FLAVOUR

*Fig.1.*

EP 0 223 560 B1

Fig.2.

KEY
I GRITTY TEXTURE
II CREAMY TEXTURE
III BITTER
IV OFF/MEATY FLAVOUR
V CHEESE FLAVOUR
VI BEST CHEESE FLAVOUR